# NEUE EUROPÄISCHE PATENTSCHRIFT

(11) **EP 2 370 484 B2**
(45) Veröffentlichungstag und Bekanntmachung des Hinweises auf die Entscheidung über den Einspruch: **07.02.2018**
(45) Hinweis auf die Patenterteilung: 12.03.2014
(21) Anmeldenummer: 09759718.1
(22) Anmeldetag: 20.11.2009
(51) Int. Cl.: C08F 251/00, C08F 251/02, C08F 279/02, C08F 279/04, C08L 51/02, C08L 55/02, C09D 151/02, C09D 155/02, D21H 19/58, D21H 19/54, C08B 31/00

(54) **VERFAHREN ZUR HERSTELLUNG VON WÄSSRIGEN POLYMERDISPERSIONEN AUS VINYLAROMATISCHER VERBINDUNG, KONJUGIERTEM ALIPHATISCHEN DIEN UND ETHYLENISCH UNGESÄTTIGTEM CARBONSÄURENITRIL**
METHOD FOR PREPARING AQUEOUS POLYMER DISPERSIONS FROM A VINYL AROMATIC COMPOUND, A CONJUGATED ALIPHATIC DIENE AND AN ETHYLENICALLY UNSATURATED CARBOXYLIC ACID NITRILE
PROCÉDÉ DE PRODUCTION DE DISPERSIONS POLYMÈRES AQUEUSES À PARTIR D'UN COMPOSÉ VINYLAROMATIQUE, D'UN DIÈNE ALIPHATIQUE CONJUGUÉ ET DE NITRILE CARBOXYLIQUE ÉTHYLÉNIQUEMENT INSATURÉ

(30) Priorität: 25.11.2008 EP 08169908
(43) Veröffentlichungstag der Anmeldung: 05.10.2011
(73) Patentinhaber: BASF SE, 67056 Ludwigshafen am Rhein (DE)
(72) Erfinder: EVSTATIEVA, Elitsa, 68159 Mannheim (DE); SCHMIDT-THÜMMES, Jürgen, 67141 Neuhofen (DE); LAWRENZ, Dirk, 67454 Haßloch (DE)
(74) Vertreter: BASF IP Association
(86) Internationale Anmeldenummer: PCT/EP2009/065535
(87) Internationale Veröffentlichungsnummer: WO 2010/060863

(56) Entgegenhaltungen:
- EP-A1- 0 536 597
- WO-A1-99/09251
- WO-A1-2009/047233
- GB-A- 1 063 422
- US-A- 4 155 888
- US-A- 5 147 907
- US-A1- 2005 176 878

## Beschreibung

Die Erfindung betrifft ein Verfahren zur Herstellung von wässrigen Polymerdispersionen, wobei eine vinylaromatische Verbindung, ein konjugiertes aliphatisches Dien und ein ethylenisch ungesättigtes Carbonsäurenitril in wässrigem Medium in Gegenwart einer abgebauten Stärke und von Radikale bildenden Initiatoren copolymerisiert werden, wobei die ethylenisch ungesättigten Carbonsäurenitrile erst zugegeben werden, wenn zumindest ein Teil der übrigen Monomere polymerisiert ist. Die Erfindung betrifft auch nach dem Verfahren hergestellte wässrige Polymerdispersionen und deren Verwendung als Bindemittel, Klebstoff, Schlichtemittel für Fasern, zur Herstellung von Überzügen oder zur Herstellung einer Papierstreichmasse.

Aus der EP-A 0 536 597 sind wässrige Polymerdispersionen bekannt, die erhältlich sind durch radikalische Emulsionspolymerisation von ungesättigten Monomeren in Gegenwart wenigstens eines Stärkeabbauprodukts, das durch Hydrolyse von nativer Stärke oder chemisch modifizierter Stärke in wässriger Phase hergestellt wird und ein gewichtsmittleres Molekulargewicht Mw von 2500 bis 25000 aufweist. Als ungesättigte Monomere setzt man beispielsweise Monomermischungen ein, die 50 bis 100 Gew.-% Ester der Acrylsäure und/oder Methacrylsäure mit 1 bis 12 C-Atome aufweisenden Alkoholen und/oder Styrol bzw. 70 bis 100 Gew.-% Styrol und/oder Butadien enthalten. Die Polymerdispersionen werden als Bindemittel, Klebstoff, Schlichtemittel für Fasern oder zur Herstellung von Überzügen verwendet.

Aus der WO 99/09251 ist ein Stärke-Copolymer-Produkt und ein Verfahren zu seiner Herstellung bekannt. Das Stärke-Copolymer-Produkt ist als Reaktionsprodukt von Stärke und mindestens einem Monomer, das radikalisch polymerisierbar ist, aufzufassen. Um wässrige Dispersionen solcher Produkte herzustellen, verwendet man eine wässrige Lösung oder Dispersion einer abgebauten Stärke, die in wässriger Lösung bei einer Temperatur von 25 °C eine intrinsische Viskosität η von 0,07 bis 0,35 dl/g hat. Die Polymerisation wird so geführt, dass man zu der auf Polymerisationstemperatur erwärmten wässrigen Lösung oder Dispersion der abgebauten Stärke zunächst einen Teil der Monomeren und des radikalischen Initiators zugibt und nach dem Anspringen der Polymerisation weitere Portionen an Monomeren und Initiator dosiert, wobei wenigstens 75 der gesamten Monomeren nach mehr als einer Stunde nach dem Initiieren der Polymerisation zugegeben werden. Die Dispersionen werden zur Herstellung von Überzügen und als Binder für Papierprodukte verwendet. Die Bindekraft solcher Produkte ist jedoch nicht ausreichend.

WO2009047233 und US5147907 offenbaren ein Verfahren zur Herstellung von wässrigen Polymerdispersionen auf Basis von Vinylaromaten, Dienen, mit einer Option für carbonsäurenitril; in Gegenwart einer Stärke und von Radikale bildenden Initiatoren.

Aus der WO 03/091300 sind wässrige Polymerdispersionen bekannt, die erhältlich sind durch radikalisch initiierte Copolymerisation von (a) 0,1 bis 99,9 Gew.-% Styrol und/oder Methylstyrol, (b) 0,1 bis 99,9 Gew.-% Butadien-1,3 und/oder Isopren und (c) 0 bis 40 Gew.-% anderen ethylenisch ungesättigte Monomeren, wobei die Summe der Monomeren (a), (b) und (c) 100 beträgt, in Gegenwart von 10 bis 40 Gew.-%, bezogen auf die eingesetzten Monomeren, mindestens einer abgebauten Stärke mit einem Molgewicht Mn von 500 bis 40 000 und von wasserlöslichen Redoxkatalysatoren. Diese Polymerdispersionen werden als Masse- und Oberflächenleimungsmittel für Papier, Pappe und Karton verwendet. Da sie eine schlechte Bindekraft haben, sind sie beispielsweise nicht als Bindemittel in Papierstreichmassen geeignet.

Bekannte Bindemittel für Papierstreichmassen auf Basis von Copolymeren aus vinylaromatischen Verbindungen und aliphatischen Dienen sind noch nicht in jeder Hinsicht völlig zufriedenstellend. Gewünscht werden insbesondere Bindemittel mit einer hohen Bindekraft und Bindemittel enthaltende Papierstreichmittel mit einer guten Oberflächenfestigkeit, z. B. einer guten Trockenrupffestigkeit und einer guten Nassrupffestigkeit. Bei wässrigen Emulsionscopolymerisaten aus vinylaromatischen Verbindungen, aliphatischen Dienen und Acrylnitril besteht die Gefahr von Instabilitäten, da es zu unerwünschter Koagulatbildung kommen kann.

Der Erfindung liegt die Aufgabe zugrunde, wässrige Polymerdispersionen auf Basis von Copolymerisaten aus Vinylaromaten und konjugierten aliphatischen Dienen zur Verfügung zu stellen, wobei die Dispersionen eine hohe Bindekraft, eine möglichst geringe Koagulatbildung und bei Einsatz in Papierstreichmassen eine gute Oberflächenfestigkeit und ein gutes Laufverhalten auf schnell laufenden Maschinen gewährleisten sollen.

Die Aufgabe wird erfindungsgemäß gelöst mit einem Verfahren zur Herstellung von wässrigen Polymerdispersionen, wobei
(a) mindestens eine vinylaromatische Verbindung,
(b) mindestens ein konjugiertes aliphatisches Dien und
(c) mindestens ein ethylenisch ungesättigtes Carbonsäurenitril

in wässrigem Medium copolymerisiert werden, wobei die Copolymerisation der Monomeren in Gegenwart einer abgebauten Stärke und von Radikale bildenden Initiatoren erfolgt und wobei mindestens ein Teil der von ethylenisch ungesättigten Carbonsäurenitrilen verschiedenen Monomere polymerisiert werden, bevor die ethylenisch ungesättigten Carbonsäurenitrile dem Polymerisationsgemisch zugegeben werden, und wobei 15 bis 60 Gew.-Teile einer abgebauten Stärke auf 100 Gew.-Teile der Monomere eingesetzt werden. Das bedeutet erfindungsgemäß, dass zu Beginn der Polymerisationsreaktion im Polymerisationsgemisch jedenfalls keine wesentlichen Mengen an ethylenisch ungesättigten Carbonsäurenitrilen enthalten sind. Dabei sindwesentliche Mengen solche Mengen, welche bei der Polymerisation zu einer wesentlichen Menge an Koagulat, insbesondere zu 100 ppm oder mehr an Koagulat führen. Polymerisationsgemisch ist die Mischung aus vorgelegten oder dem Polymerisationsgefäß zugeführten Monomeren und bereits entstandenem Polymer.

### Vorzugweise werden

(a) 19,8 bis 80 Gew.-Teile mindestens einer vinylaromatischen Verbindung,
(b) 19,8 bis 80 Gew.-Teile mindestens eines konjugierten aliphatischen Diens,
(c) 0,1 bis 19 Gew.-Teile mindestens eines ethylenisch ungesättigten Carbonsäurenitrils,
(d) 0,1 bis 10 Gew.-Teile mindestens einer ethylenisch ungesättigten Säure und
(e) 0 bis 20 Gew.-Teile mindestens eines anderen monoethylenisch ungesättigten Monomeren,
eingesetzt, wobei die Summe der Gew.-Teile der Monomeren (a) bis (e) 100 beträgt.

Die wässrigen Polymerdispersionen sind beispielsweise dadurch erhältlich, dass man bei der Emulsionscopolymerisation Monomermischungen aus
(a) 19,8 bis 80, vorzugsweise 25 bis 70 Gew.-Teile, Styrol und/oder Methylstyrol,
(b) 19,8 bis 80, vorzugsweise 25 bis 70 Gew.-Teile 1,3-Butadien und/oder Isopren,
(c) 0,1 bis 19 Gew.-Teilen Acrylnitril und/oder Methacrylnitril,
(d) 0,1 bis 10 Gew.-Teile mindestens einer ethylenisch ungesättigten Säure und
(e) 0 bis 20 Gew.-Teilen mindestens eines anderen monoethylenisch ungesättigten Monomeren,
einsetzt, wobei die Summe der Gew.-Teile der Monomeren (a) bis (e) 100 beträgt.

Als Monomere der Gruppe (a) kommen vinylaromatische Verbindungen in Betracht, z.B. Styrol, α-Methylstyrol und/oder Vinyltoluol. Aus dieser Gruppe von Monomeren wird vorzugsweise Styrol verwendet. 100 Gew.-Teile der bei der Polymerisation insgesamt eingesetzten Monomermischungen enthalten beispielsweise 19,8 bis 80 Gew.-Teile und vorzugsweise 25 bis 70 Gew.-Teile mindestens eines Monomers der Gruppe (a).

Monomere der Gruppe (b) sind beispielsweise Butadien-1,3, Isopren, Pentadien-1,3, Dimethylbutadien-1,3 und Cyclopentadien. Aus dieser Gruppe von Monomeren setzt man vorzugsweise Butadien-1,3 und/oder Isopren ein. 100 Gew.-Teile der Monomermischungen, die bei der Emulsionspolymerisation insgesamt eingesetzt werden, enthalten beispielsweise 19,8 bis 80 Gew.-Teile, vorzugsweise 25 bis 70 Gew.-Teile und insbesondere 25 bis 60 Gew.-Teile mindestens eines Monomers der Gruppe (b).

Monomere der Gruppe (c) sind beispielsweise Acrylnitril und Methacrylnitril. Die Monomere der Gruppe (c) werden beispielsweise in einer Menge von 0,1 bis 19 Gew.-Teilen, vorzugsweise von 2 bis 12 Gew.-Teile und insbesondere von 4 bis 9 Gew.-Teilen auf 100 Gew.-Teile der Monomermischungen eingesetzt.

Monomere der Gruppe (d) sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende α,β-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat.

Die Säuregruppen enthaltenden Monomeren der Gruppe (d) können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel. 100 Gew.-Teile der Monomermischungen, die bei der Emulsionspolymerisation eingesetzt werden, enthalten beispielsweise 0,1 bis 10 Gew.-Teile, vorzugsweise 0,1 bis 8 Gew.-Teile oder 1 bis 6 Gew.-Teile mindestens eines Monomers der Gruppe (d).

Als Monomere der Gruppe (e) kommen andere monoethylenisch ungesättigte Verbindungen in Betracht. Beispiele hierfür sind ethylenisch ungesättigte Carbonsäureamide wie insbesondere Acrylamid und Methacrylamid, Vinylester von gesättigten C1- bis C18-Carbonsäuren, vorzugsweise Vinylacetat, sowie Ester der Acrylsäure und der Methacrylsäure mit einwertigen C1- bis C18-Alkoholen wie Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylester gesättigter Carbonsäuren, Vinylether, Vinylketone, Dialkylester ethylenisch ungesättigter Carbonsäuren, N-Vinylpyrrolidon, N-Vinylpyrrolidin, N-Vinylformamid, N,N-Dialkylamonialkylacrylamide, N,N-Dialkylaminoalkylmethacrylamide, N,N-Dialkylaminoalkylacrylate, N,N-Dialkylaminoalkylmethacrylate, Vinylchlorid und Vinylidenchlorid. Diese Gruppe von Monomeren wird gegebenenfalls zur Modifizierung der Polymeren eingesetzt. 100 Gew.-Teile der bei der Emulsionspolymerisation eingesetzten Monomermischungen enthalten beispielsweise 0 bis 20 Gew.-Teile, oder 0,1 bis 15 Gew.-Teile und insbesondere 0,5 bis 10 Gew.-Teile mindestens eines Monomers der Gruppe (d).

Bei der Emulsionscopolymerisation setzt man 15 bis 60 Gew.-Teile einer abgebauten Stärke auf 100 Gew.-Teile der Monomeren ein. Als Ausgangstärken zur Herstellung der erfindungsgemäß zu verwendenden abgebauten Stärken eignen sich alle nativen Stärken wie Stärken aus Mais, Weizen, Hafer, Gerste, Reis, Hirse, Kartoffeln, Erbsen, Tapioka, Sorghum oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken liegt oberhalb von 90 %, meistens bei 95 bis 100 %. Auch chemisch durch Veretherung oder Veresterung modifizierte Stärken können zur Herstellung der erfindungsgemäßen Polymerdispersionen eingesetzt werden. Solche Produkte sind bekannt und im Handel erhältlich. Sie werden beispielsweise durch Veresterung von nativer Stärke oder abgebauter nativer Stärke mit anorganischen oder organischen Säuren, deren Anhydriden oder Chloriden hergestellt. Von besonderem Interesse sind phosphatierte und acetylierte abgebaute Stärken. Die gängigste Methode zur Veretherung von Stärken besteht in der Behandlung von Stärke mit organischen Halogenverbindungen, Epoxiden oder Sulfaten in wässriger alkalischer Lösung. Bekannte Stärkeether sind Alkylether, Hydroxyalkylether, Carboxyalkylether und Allylether. Außerdem eignen sich die Umsetzungsprodukte von Stärken mit 2,3-Epoxipropyltrimethylammoniumchlorid. Besonders bevorzugt sind abgebaute native Stärken, insbesondere zu Maltodextrin abgebaute native Stärken. Weitere geeignete Stärken sind kationisch modifizierte Stärken, d.h. Stärkeverbindungen, welche Aminogruppen oder Ammoniumgruppen aufweisen.

Der Abbau der Stärken kann enzymatisch, oxidativ oder hydrolytisch durch Einwirkung von Säuren oder Basen erfolgen. Abgebaute Stärken sind im Handel erhältlich. Man kann jedoch auch eine natürliche Stärke beispielsweise zunächst enzymatisch in wässrigem Medium abbauen und nach dem Abstoppen des enzymatischen Abbaus in der so erhaltenen wässrigen Lösung bzw. Dispersion der abgebauten Stärke die Emulsionspolymerisation der Monomeren erfindungsgemäß durchführen. Die abgebauten Stärken haben beispielsweise eine intrinsische Viskosität ηi von weniger als 0,07 dl/g oder weniger als 0,05 dl/g. Die intrinsische Viskosität ηi der abgebauten Stärken liegt vorzugsweise in dem Bereich von 0,02 bis 0,06 dl/g. Die intrinsische Viskosität ηi wird bestimmt gemäß DIN EN1628 bei einer Temperatur von 23 °C.

Die bei der Emulsionspolymerisation eingesetzten Mengen an abgebauter Stärke betragen vorzugsweise 20 bis 50 Gew.-Teile, insbesondere 30 bis 45 Gew.-Teile, bezogen auf 100 Gew.-Teile der zu polymerisierenden Monomeren.

In einer bevorzugten Ausführungsform des erfindungsgemäßen Verfahrens legt man zusammen mit der wässrigen Lösung oder Dispersion der abgebauten Stärke und mindestens 30 Gew.-% des Initiators 1 bis 10 Gew.-% der insgesamt zu polymerisierenden Monomeren in dem wässrigen Medium vor. Vorzugsweise ist bei den vorgelegten Monomeren kein ethylenisch ungesättigtes Carbonsäurenitril, insbesondere kein Acrylnitril enthalten. Die restlichen Monomeren und der restliche Initiator werden dann nach dem Anspringen der Polymerisation unter Polymerisationsbedingungen, jedoch getrennt voneinander, zur Vorlage dosiert. Bei der Emulsionspolymerisation wird vorzugsweise eine abgebaute native Stärke mit einer intrinsischen Viskosität ηi von 0,02 bis 0,06 dl/g eingesetzt. Unter Polymerisationsbedingungen soll verstanden werden, dass das Reaktionsgemisch in der Vorlage auf die erforderliche Temperatur erhitzt worden ist, bei der die Polymerisation abläuft. Diese Temperaturen betragen beispielsweise 80 bis 130 °C, vorzugsweise 90 bis 120 °C. Die Polymerisation wird vorzugsweise unter Druck durchgeführt, z.B. bei Drücken bis zu 15 bar, z.B. bei 2 bis 10 bar.

Bei dem erfindungsgemäßen Verfahren verwendet man üblicherweise Initiatoren, die unter den Reaktionsbedingungen Radikale bilden. Geeignete Polymerisationsinitiatoren sind z.B. Peroxide, Hydroperoxide, Wasserstoffperoxid, Natrium- oder Kaliumpersulfat, Redoxkatalysatoren und Azoverbindungen wie 2,2-Azobis(4-methoxy-2,4-dimethylvaleronitril), 2,2-Azobis(2,4-dimethylvaleronitril) und 2,2-Azobis(2-amidinopropan)dihydrochlorid. Beispiele für weitere geeignete Initiatoren sind Dibenzoylperoxid, tert.-Butylperpivalat, tert.-Butyl-per-2-ethylhexanoat, Di-tert.-butylperoxid, Diamylperoxid, Dioctanoylperoxid, Didecanoylperoxid, Dilauroylperoxid, Bis(o-toluyl)peroxid, Succinylperoxid, tert.-Butalperacetat, tert.-Butylpermaleinat, tert.-Butylperisobutyrat, tert.-Butylperpivalat, tert.-Butylperoctoat, tert.-Butylperbenzoat, tert.-Butylhydroperoxid, Azo-bis-isobutyronitril, 2,2'-Azo-bis-(2-methylbutyronitril), 2,2'-Azobis(2,4-dimethylvaleronitril) und 2,2'-Azobis(N,N'-dimethylenisobutyroamidin)-dihydrochlorid. Bevorzugt sind Initiatoren ausgewählt aus der Gruppe der Peroxodisulfate, Peroxosulfate, Azoinitiatoren, organischen Peroxide, organischen Hydroperoxide und Wasserstoffperoxid. Besonders bevorzugt werden wasserlösliche Initiatoren eingesetzt, z. B. Natriumpersulfat, Kaliumpersulfat, Ammoniumpersulfat, Natriumperoxodisulfat, Kaliumperoxodisulfat und/oder Ammoniumperoxodisulfat. Man kann die Polymerisation auch mit Hilfe energiereicher Strahlen wie Elektronenstrahlen oder durch Bestrahlen mit UV-Licht initiieren.

Die Initiatoren werden beispielsweise in Mengen bis zu 2 Gew.-%, vorzugsweise zu mindestens 0,9 Gew.-%, z. B. von 1,0 bis 1,5 Gew.-%, bezogen auf die zu polymerisierenden Monomeren, eingesetzt. Vorzugsweise werden mindestens 30 Gew.-% der Initiatoren zusammen mit der abgebauten Stärke in dem wässrigen Medium vorgelegt und die Monomeren sowie die restlichen Initiatoren werden unter Polymerisationsbedingungen in diese Vorlage dosiert.

Um die erfindungsgemäßen Polymerdispersionen herzustellen, legt man beispielsweise in einem beheizbaren Reaktor, der mit einer Mischvorrichtung ausgestattet ist, eine wässrige Lösung der oben beschriebenen abgebauten Stärke und vorzugsweise mindestens 30 Gew.-% der insgesamt benötigten Initiatormenge vor. Die Menge an Initiator in der Vorlage beträgt vorzugsweise höchstens 90 Gew.-%, meistens nicht mehr als 60 Gew.-% der insgesamt zum Polymerisieren der Monomeren erforderlichen Menge. Die abgebaute Stärke bewirkt eine gute Dispergierung der Monomeren und eine Stabilisierung der entstehenden feinteiligen Polymeren. Bei der Emulsionspolymerisation erfolgt zumindest eine teilweise Pfropfung der abgebauten Stärke, die dadurch fest in das entstehende Polymer eingebaut wird.

Um die Dispergierung der Monomeren in dem wässrigen Medium zu unterstützen, kann man die üblicherweise als Dispergiermittel eingesetzten Schutzkolloide und/oder Emulgatoren verwenden. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol , insbesondere von 5000 bis 50000 g/mol.

Geeignete Emulgatoren sind beispielsweise ethoxylierte C8- bis C36-Fettalkohole mit einem Ethoxylierungsgrad von 3 bis 50, ethoxylierte Mono-, Di- und Tri- C4- bis C12-Alkylphenole mit einem Ethoxylierungsgrad von 3 bis 50, Alkalimetallsalze von Dialkylestern der Sulfobernsteinsäure, Alkalimetall- und Ammoniumsalze von C8- bis C12-Alkylsulfaten, Alkalimetall- und Ammoniumsalze von C12- bis C18-Alkylsulfonsäuren und Alkalimetall- und Ammoniumsalze von C9- bis C18-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mitverwendet werden, betragen die davon verwendeten Mengen beispielsweise 0,1 bis 5 Gew.-%, bezogen auf die Monomeren.

Die Vorlage kann außerdem noch eine Polystyrolsaat enthalten, d.h. eine wässrige Dispersion von feinteiligem Polystyrol mit einem Teilchendurchmesser von 20 bis 40 nm.

Um die Eigenschaften der Polymeren zu modifizieren, kann man die Emulsionspolymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Weitere Polymerisationsregler sind Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren. Die Regler werden vorzugsweise zusammen mit den Monomeren in die Vorlage dosiert. Sie können jedoch auch teilweise oder vollständig in der Vorlage anwesend sein. Sie können auch stufenweise gegenüber den Monomeren versetzt zudosiert werden

Die Emulsionspolymerisation erfolgt in einem wässrigen Medium. Hierbei kann es sich z. B. um vollständig entsalztes Wasser handeln oder auch um Mischungen aus Wasser und einem damit mischbaren Lösemittel wie Methanol, Ethanol oder Tetrahydrofuran. Um die Monomeren zu polymerisieren, bereitet man zunächst eine wässrige Lösung der abgebauten Stärke. Diese Lösung kann gegebenenfalls ein Schutzkolloid und/oder einen Emulgator in gelöster Form sowie gegebenenfalls eine Polystyrolsaat enthalten. Die als Vorlage benutzte wässrige Lösung wird vorzugsweise auf die Temperatur erhitzt, bei der die Polymerisation der Monomeren erfolgen soll oder auf eine Temperatur, die beispielsweise 5 bis 20 °C unterhalb der Polymerisationstemperatur liegt, bevor mindestens 30 % der insgesamt erforderlichen Initiatormenge in die Vorlage gegeben wird. Sobald die jeweils gewünschte Polymerisationstemperatur erreicht ist oder innerhalb einer Zeitspanne von 1 bis 15 Minuten, vorzugsweise 5 bis 15 Minuten nach dem Erreichen der Polymerisationstemperatur beginnt man mit dem Dosieren der Monomeren. Sie können beispielsweise kontinuierlich innerhalb von beispielsweise 60 Minuten bis zu 10 Stunden, meistens innerhalb von 2 bis 4 Stunden in den Reaktor gepumpt werden.

Zumindest hinsichtlich der ethylenisch ungesättigten Carbonsäurenitrile erfolgt eine stufenweise Zugabe. Dabei wird zumindest ein Teil der von ethylenisch ungesättigten Carbonsäurenitrilen verschiedenen Monomere vorgelegt oder der Vorlage zudosiert, bevor mit der Zugabe der ethylenisch ungesättigten Carbonsäurenitrile begonnen wird. In einer bevorzugten Ausführungsform werden mindestens 10, besonders bevorzugt mindestens 20 oder mindestens 30 Gew.-% bezogen auf die Gesamtmenge aller Monomere, an von ethylenisch ungesättigten Carbonsäurenitrilen verschiedenen Monomeren in dem wässrigen Medium unter Polymerisationsbedingungen vorgelegt und/oder der Polymerisationsmischung unter Polymerisationsbedingungen zugegeben, bevor die Zugabe von ethylenisch ungesättigten Carbonsäurenitrilen gestartet wird. Dabei können beispielsweise mindestens 1, besonders bevorzugt mindestens 3 oder mindestens 5 Gew.-% der Monomere vorgelegt werden, bevor der Zulauf der restlichen Monomere gestartet wird. Das Polymerisationsgemisch besteht bei Beginn der Zugabe von ethylenisch ungesättigten Carbonsäurenitrilen vorzugsweise zu mindestens 10, vorzugsweise mindestens 20 oder mindestens 30 Gew.-Teilen, aus bereits entstandenem (carbonsäurenitrilfreiem) Polymer. Insbesondere sind vorzugsweise mindestens 10, besonders bevorzugt mindestens 20 oder mindestens 30 Gew.-% der von ethylenisch ungesättigten Carbonsäurenitrilen verschiedenen Monomeren, insbesondere Styrol und 1,3-Butadien, bereits polymerisiert, bevor mit der Zugabe von ethylenisch ungesättigten Carbonsäurenitrilen begonnen wird.

In den erfindungsgemäß erzeugten Polymerpartikeln befinden sich von ethylenisch ungesättigten Carbonsäurenitrilen, insbesondere von Acrylnitril abgeleitete Einheiten vermutlich überwiegend an der Oberfläche oder in einer äußeren Schicht der Polymerpartikel. Der Kern der Polymerpartikel weist vermutlich eine geringere Konzentration an von ethylenisch ungesättigten Carbonsäurenitrilen abgeleiteten Einheiten auf als die Schale.

Auch eine stufenweise erfolgende Zugabe der übrigen Monomeren ist möglich, insbesondere eine stufenweise Zugabe der Monomeren d). In einer bevorzugten Ausführungsform des erfindungsgemäßen Verfahrens legt man 1 bis 10 Gew.-% der insgesamt zu polymerisierenden Monomeren vor. Hierbei legt man die Monomeren im Reaktor vorzugsweise zusammen mit den vorstehend genannten Bestandteilen vor und erhitzt dann den Reaktorinhalt auf die Polymerisationstemperatur, wobei man mindestens 30 Gew.-% der Initiatormenge vorzugsweise kurz vor Erreichen der Polymerisationstemperatur wie oben beschrieben zusetzt und dann die restlichen Monomeren wie oben angegeben dosiert. Bei den vorgelegten Monomeren sind erfindungsgemäß keine ethylenisch ungesättigter Carbonsäurenitrile enthalten. Das bedeutet erfindungsgemäß, dass jedenfalls keine wesentlichen Mengen an ethylenisch ungesättigten Carbonsäurenitrilen enthalten sind. Dabei sind wesentliche Mengen solche Mengen, welche bei der Polymerisation zu einer wesentlichen Menge an Koagulat, insbesondere zu 100 ppm oder mehr an Koagulat führen.

Nach Abschluss der Polymerisation kann man gegebenenfalls weiteren Initiator zum Reaktionsgemisch zugeben und eine Nachpolymerisation bei gleicher, niedrigerer oder auch höherer Temperatur wie bei der Hauptpolymerisation durchführen. Um die Polymerisationsreaktion zu vervollständigen reicht es in den meisten Fällen, das Reaktionsgemisch nach Zugabe sämtlicher Monomeren noch beispielsweise 1 bis 3 Stunden bei der Polymerisationstemperatur zu rühren.

Der pH-Wert kann bei der Polymerisation beispielsweise 1 bis 5 betragen. Nach der Polymerisation wird der pH-Wert beispielsweise auf einen Wert zwischen 6 und 7 eingestellt. Man erhält praktisch koagulatfreie wässrige Dispersionen. Die Menge an Koagulat liegt im ppm-Bereich und beträgt vorzugsweise weniger als 100 ppm, insbesondere weniger als 50 ppm.

Man erhält eine wässrige Polymerdispersion, deren dispergierte Teilchen einen mittleren Teilchendurchmesser von vorzugsweise 80 bis 150 nm aufweisen. Der mittlere Teilchendurchmesser der Polymerteilchen kann durch dynamische Lichtstreuung an einer 0,005 bis 0,01 gew.-%igen wässrigen Polymerdispersion bei 23°C mit Hilfe eines Autosizers IIC der Fa. Malvern Instruments, England, ermittelt werden. Die Angaben beziehen sich jeweils auf den mittleren Durchmesser der Kumulantenauswertung (cumulant z-average) der gemessenen Autokorrelationsfunktion gemäß IOS-Norm 13321.

In einer Ausführungsform beträgt der Feststoffgehalt der erfindungsgemäßen wässrigen Polymerdispersion mehr als 55 Gew.-% z.B. mindestens 60 Gew.-%. Ein entsprechend hoher Feststoffgehalt kann z.B. durch entsprechende Einstellung der bei der Emulsionspolymerisation eingesetzten Wassermenge und/oder der Monomermengen erfolgen.

In einer Ausführungsform erfolgt die Emulsionscopolymerisation emulgator frei und/oder ohne Verwendung von Polymersaat.

Die erfindungsgemäßen wässrigen Polymerdispersionen werden als Bindemittel, Klebstoff, Schlichtemittel für Fasern, zur Herstellung von Überzügen oder zur Herstellung von Papierstreichmassen verwendet. Die erfindungsgemäßen wässrigen Polymerdispersionen eignen sich sowohl zum Schlichten von Textilfasern und auch zum Schlichten von Mineralfasern, insbesondere Glasfasern. Aufgrund ihrer guten Klebkraft, insbesondere bei Verwendung von Comonomeren, welche zu einer niedrigen Glasübergangstemperatur des Copolymers (z. B. kleiner 20°C) führen, kann man sie außerdem als Klebstoff und zur Herstellung von Überzügen verwenden. Bevorzugt werden die erfindungsgemäßen wässrigen Polymerdispersionen als Bindemittel in Papierstreichmassen eingesetzt.

Ein Gegenstand der Erfindung ist daher auch eine Papierstreichmasse, enthaltend
(i) anorganische Pigmente und
(ii) eine oben beschriebene, nach dem erfindungsgemäßen Verfahren erhältliche wässrige Polymerdispersion und gegebenenfalls weiteren Zusatzstoffen.

Päpierstreichmassen enthalten neben Wasser im allgemeinen Pigmente, Bindemittel und Hilfsmittel zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.-%, z. B. 80 bis 95 Gew.-% oder 80 bis 90 Gew.-%, bezogen auf den Gesamtfeststoffgehalt. In betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb® 60, Hydrocarb® 60 oder Hydrocarb® 90 ME. Weitere Geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim® MP 50 (Clay), Hydragloss® 90 (Clay) oder Talcum C10.

Die Papierstreichmasse enthält mindestens ein Bindemittel. Die erfindungsgemäß hergestellte Polymerdispersion kann in der Papierstreichmasse als alleiniges Bindemittel oder in Kombination mit weiteren Bindemitteln eingesetzt werden. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen. Auf 100 Gew.-Teile Pigmente verwendet man beispielweise 1 bis 50 Gew.-Teile, vorzugsweise 1 bis 25 Gew.-Teile oder 5 bis 20 Gew.-Teile eines organischen Bindemittels (fest, d.h. ohne Wasser oder sonstige bei 21 °C, 1 bar flüssige Lösemittel).

Als weitere Bindemittel in Betracht kommen Bindemittel auf natürlicher Basis, insbesondere Bindemittel auf Stärkebasis sowie von den erfindungsgemäß hergestellten Polymerisaten verschiedene, synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Getreidestärke.

Die weiteren, von den erfindungsgemäß hergestellten Polymerisaten verschiedenen, synthetischen Bindemittel bestehen vorzugsweise zu mindestens 40 Gew.-%, bevorzugt zu mindestens 60 Gew.-%, besonders bevorzugt zu mindestens 80 Gew.-% aus so genannten Hauptmonomeren. Die Hauptmonomeren sind ausgewählt aus C1-C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren. Zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat,- stearat, Vinylpropionat, Versaticsäurevinylester und Vinylacetat. Als vinylaromatische Verbindungen kommen Vinyltoluol, α- und p-Methylstyrol, α-Butyl-styrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere sind C1-C10-Alkyl(meth)acrylate und Mischungen der Alkyl(meth)acrylate mit Vinylaromaten, insbesondere Styrol, oder Kohlenwasserstoffe mit 2 Doppelbindungen, insbesondere Butadien, oder Gemische von derartigen Kohlenwasserstoffen mit Vinylaromaten, insbesondere Styrol. Bei Gemischen von aliphatischen Kohlenwasserstoffen (insbesondere Butadien) mit Vinylaromaten (insbesondere Styrol) kann das Verhältnis z. B. zwischen 10:90 bis 90:10, insbesondere 20:80 bis 80:20 liegen. Besonders bevorzugte Hauptmonomere sind Butadien und die vorstehenden Mischungen von Butadien und Styrol.

Neben den Hauptmonomeren kann das als Bindemittel geeignete Emulsionspolymerisat weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Der Gehalt an ethylenisch ungesättigten Säuren im Emulsionspolymerisat ist im Allgemeinen kleiner 10 Gew.-%, vorzugsweise kleiner 8 Gew.-% und mindestens 0,1 Gew.% oder mindestens 1 Gew.%. Weitere Monomere sind z. B. auch Hydroxylgruppen enthaltende Monomere, insbesondere C1-C10-Hydroxyalkyl(meth)acrylate, oder Amide wie (Meth)acrylamid.

Bei Verwendung von synthetischen Bindemitteln können auch natürliche Bindemittel wie Stärke mit verwendet werden, sind jedoch nicht zwingend erforderlich.

Erfindungsgemäße Papierstreichmassen können zusätzlich weitere Zusatz- und Hilfsstoffe enthalten, z.B. Füllstoffe, Co-Bindemittel und Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszens- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 70 Gew.-%. Der pH Wert der Papierstreichmasse wird vorzugsweise auf Werte von 6 bis 10, insbesondere 7 bis 9,5 eingestellt.

Eine Ausführungsform der Erfindung betrifft eine Papierstreichmasse, wobei die Polymerisate der erfindungsgemäß hergestellten wässrigen Polymerdispersion in einer Menge von 1 bis 50 Gew.-Teilen, bezogen auf die Gesamtmenge an Pigmenten, eingesetzt werden und wobei die Pigmente in einer Menge von 80 bis 95 Gewichtsteilen, bezogen auf den Gesamtfeststoffgehalt, enthalten sind und ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und wobei die Papierstreichmasse zusätzlich mindestens einen Hilfsstoff enthält, ausgewählt aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Gegenstand der Erfindung ist auch mit einer erfindungsgemäßen Papierstreichmasse beschichtetes Papier oder Karton und ein Verfahren zum Streichen von Papier oder Karton, wobei
- eine wässrige Polymerdispersion erfindungsgemäß hergestellt wird; und
- mit dieser Polymerdispersion, mindestens einem Pigment und optionalen weiteren Hilfsstoffen eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder unbeschichteten Karton aufgetragen. Die Menge beträgt im allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die wässrigen Dispersionen der wasserlöslichen Copolymere in Papierstreichmassen für den Grundstrich und/oder für den Deckstrich verwendet werden.
Bei dem erfindungsgemäßen Herstellungsverfahren wird eine Koagulatbildung weitgehend unterdrückt. Erfindungsgemäße Papierstreichmassen haben gute anwendungstechnische Eigenschaften. Sie haben ein gutes Laufverhalten in Papierbeschichtungsverfahren und ein hohe Bindekraft. Die beschichteten Papiere und Kartone haben eine gute Oberflächenfestigkeit, insbesondere eine sehr hohe Nass- und Trockenrupffestigkeit. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Die Feststoffgehalte werden bestimmt, indem eine definierte Menge der jeweiligen wässrigen Copolymerisatdispersion (ca. 5 g) bei 140 °C in einem Trockenschrank bis zur Gewichtskonstanz getrocknet wird. Es werden jeweils zwei separate Messungen durchgeführt und der Mittelwert gebildet.

Die Bestimmung der Glasübergangstemperatur erfolgt gemäß DIN 53765 mittels eines DSC820-Geräts, Serie TA8000 der Fa. Mettler-Toledo Int. Inc.

Die Menge an Koagulat in der Dispersion bezieht sich auf Teilchen, deren Durchmesser > 45 µm ist. Sie wird bestimmt, indem man die fertige Dispersion durch ein Sieb mit bekanntem Porendurchmesser filtriert.

Die mittleren Teilchendurchmesser der Polymerteilchen werden durch dynamische Lichtstreuung an einer 0,005 bis 0,01 gew.-%igen wässrigen Polymerdispersion bei 23°C mittels eines Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

Die intrinsische Viskosität ηi wird gemäß DIN EN.1628 bei einer Temperatur von 23°C bestimmt.

In den Beispielen wurden folgende Einsatzstoffe verwendet:

| | |
|---|---|
| Emulgator A: | Arylsulfonat (Disponil® LDPS 20 der Fa. Cognis) |
| Abgebaute Stärke A: | handelsübliches 67%iges wässriges Maltodextrin mit einer intrinsischen Viskosität ηi von 0,052 dl/g |

### Beispiel 1 (Vergleichsbeispiel, Acrylnitril von Beginn an zudosiert)

In einem 6 L Druckreaktor, ausgerüstet mit einem MIG-Rührer und 3 Dosiereinrichtungen, wurden bei Raumtemperatur und unter Stickstoffatmosphäre 320 g entionisiertes Wasser, 41 g einer 33 gew.-%igen wässrigen Polystyrolsaat (Partikelgröße 30 nm), 16 Gewichtsteile Emulgator A, 1080 g der abgebauten Stärke A vorgelegt und jeweils 5 Gew.-% der Zuläufe 1 A und 1 B vorgelegt. Anschließend wurde der Reaktorinhalt unter Rühren (180 Upm) auf 90 °C aufgeheizt. Sobald eine Temperatur von 85 °C erreicht war, wurden 128 g einer 7 gew.-%igen wässrigen Natriumpersulfat-Lösung zugegeben. Nach 10 Minuten wurden zeitgleich beginnend die Gesamtmenge an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1 A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen NaOH auf einen pH-Wert von 6,5 ein und entspannte den Druckbehälter auf Atmosphärendruck.

### Zulauf 1A

homogene Mischung aus

| | |
|---|---|
| 836 g | entionisiertem Wasser |
| 12 g | einer 15 gew.-%igen wässrigen Natriumdodecylsulfat-Lösung |
| 72 g | Acrylsäure |
| 9 g | Itaconsäure |

### Zulauf 1 B

homogene Mischung aus

| | |
|---|---|
| 900 g | Styrol |
| 126g | Acrylnitril |
| 18 g | tertiär-Dodecylmercaptan |
| 702 g | Butadien |

### Zulauf 2

| | |
|---|---|
| 257 g | einer 3,5 gew.-%igen wässrigen Natriumpersulfat-Lösung |

Die erhaltene wässrige Dispersion (D1) hat während der Nachpolymerisierungszeit massiv Koagulat gebildet. Das gebildete Koagulat wurde von der Dispersion durch Filtration über ein Sieb (Maschenweite 100 Mikrometer) abgetrennt.

### Beispiel 2 (Vergleichsbeispiel, Acrylnitril von Beginn an zudosiert

In einem 6 L Druckreaktor, ausgerüstet mit einem MIG-Rührer und 3 Dosiereinrichtungen, wurden bei Raumtemperatur und unter Stickstoffatmosphäre 593 g entionisiertes Wasser, 41 g einer 33 gew.-%igen wässrigen Polystyrolsaat (Partikelgröße 30 nm, mit 16 Gewichtsteilen Emulgator Disponil® LDPS 20 der Fa. Cognis) und 806 g eines 67 gew.-%igen Maltodextrins (Roclys C1967S, Roquette) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 128 g einer 7 gew.-%igen wässrigen Natriumpersulfat-Lösung zugegeben. Nach 10 Minuten wurden zeitgleich beginnend die Gesamtmenge an Zulauf 1 A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen NaOH auf einen pH-Wert von 6,5 ein und entspannte den Druckbehälter auf Atmosphärendruck.

### Zulauf 1A

homogene Mischung aus

| | |
|---|---|
| 837 g | entionisiertes Wasser |
| 14 g | einer 15 gew.-%igen wässrigen Natriumdodecylsulfat-Lösung |
| 72 g | Acrylsäure |
| 9 g | Itaconsäure |

### Zulauf 1 B

homogene Mischung aus

| | |
|---|---|
| 882 g | Styrol |
| 72g | Acrylnitril |
| 20 g | tertiär-Dodecylmercaptan |
| 793 g | Butadien |

### Zulauf 2

| | |
|---|---|
| 257 g | einer 3,5 gew.-%igenwässrigen Natrium persulfat-Lösung |

Die erhaltene wässrige Dispersion (D2) wies einen Feststoffgehalt von 52,4 Gew.-%, bezogen auf das Gesamtgewicht der wässrigen Dispersion, auf und enthielt 470 ppm Koagulat. Die Dispersion war aufgrund des hohen Koagulatgehalts nicht filtrierbar. Die Glasübergangstemperatur wurde zu 5 °C und die mittlere Teilchengröße zu 160 nm bestimmt.

### Beispiel 3 (Acrylnitril nachträglich zudosiert)

In einem 6 L Druckreaktor, ausgerüstet mit einem MIG-Rührer und 3 Dosiereinrichtungen, wurden bei Raumtemperatur und unter Stickstoffatmosphäre 320 g entionisiertes Wasser, 41 g einer 33 gew.-%igen wässrigen Polystyrolsaat (Partikelgröße 30 nm), 16 Gewichtsteile Emulgator A, 1080 g der abgebauten Stärke A vorgelegt und jeweils 5 Gew.-% der Zuläufe 1A und 1 B vorgelegt. Anschließend wurde der Reaktorinhalt unter Rühren (180 Upm) auf 90 °C aufgeheizt. Sobald eine Temperatur von 85 °C erreicht war, wurden 128 g einer 7 gew.-%igen wässrigen Natriumpersulfat-Lösung zugegeben. Nach 10 Minuten wurden zeitgleich beginnend die Gesamtmenge an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1A und Zulauf 1 B kurz vor dem Eintritt in den Reaktor homogenisiert. Zulauf 1C wurde erst 120 min nach Start der Zulauf 1 A und 1 B über 240 min kontinuierlich zudosiert. Anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen NaOH auf einen pH-Wert von 6,5 ein und entspannte den Druckbehälter auf Atmosphärendruck. Das gebildete Koagulat wurde von der Dispersion durch Filtration über ein Sieb (Maschenweite 100 Mikrometer) abgetrennt.

### Zulauf 1 A

homogene Mischung aus

| | |
|---|---|
| 836 g | entionisiertem Wasser |
| 12 g | einer 15 gew.-%igen wässrigen Natriumdodecylsulfat-Lösung |
| 72 g | Acrylsäure |
| 9 g | Itaconsäure |

### Zulauf 1 B

homogene Mischung aus

| | |
|---|---|
| 900 g | Styrol |
| 18 g | tertiär-Dodecylmercaptan |
| 702 g | Butadien |

### Zulauf 1C

| | |
|---|---|
| 126g | Acrylnitril |

### Zulauf 2

| | |
|---|---|
| 257 g | einer 3,5 gew.-%igen wässrigen Natriumpersulfat-Lösung |

Die erhaltene wässrige Dispersion (D3) wies einen Feststoffgehalt von 52 Gew.-%, bezogen auf das Gesamtgewicht der wässrigen Dispersion, auf und enthielt 21 ppm Koagulat. Die Glasübergangstemperatur wurde zu 3 °C und die Teilchengröße zu 140 nm bestimmt.

### Beispiel 4 (Acrylnitril nachträglich zudosiert)

In einem 6 L Druckreaktor, ausgerüstet mit einem MIG-Rührer und 3 Dosiereinrichtungen, wurden bei Raumtemperatur und unter Stickstoffatmosphäre 593 g entionisiertes Wasser, 41 g einer 33 gew.-%igen wässrigen Polystyrolsaat (Partikelgröße 30 nm, mit 16 Gewichtsteilen Emulgator Disponil® LDPS 20 der Fa. Cognis) und 806 g eines 67 gew.-%igen Maltodextrins (Roclys C1967S, Roquette) und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 128 g einer 7 gew.-%igen wässrigen Natriumpersulfat-Lösung zugegeben. Nach 10 Minuten wurden zeitgleich beginnend die Gesamtmenge an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1 A und Zulauf 1 B kurz vor dem Eintritt in den Reaktor homogenisiert. Zulauf 1C wurde erst 120 min nach Start der Zulauf 1A und 1 B über 240 min kontinuierlich zudosiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrigen NaOH auf einen pH-Wert von 6,5 ein und entspannte den Druckbehälter auf Atmosphärendruck.

### Zulauf 1 A

homogene Mischung aus

| | |
|---|---|
| 837 g | entionisiertes Wasser |
| 14 g | einer 15 gew.-%igen wässrigen Natriumdodecylsulfat-Lösung |
| 72 g | Acrylsäure |
| 9 g | Itaconsäure |

### Zulauf 1 B

homogene Mischung aus

| | |
|---|---|
| 882 g | Styrol |
| 20 g | tertiär-Dodecylmercaptan |
| 793 g | Butadien |

### Zulauf 1C

| | |
|---|---|
| 72g | Acrylnitril |

### Zulauf 2

| | |
|---|---|
| 257 g | einer 3,5 gew.-%igen wässrigen Natriumpersulfat-Lösung |

Die erhaltene wässrige Dispersion (D4) wies einen Feststoffgehalt von 52,4 Gew.-%, bezogen auf das Gesamtgewicht der wässrigen Dispersion, auf und enthielt 12 ppm Koagulat. Die Glasübergangstemperatur wurde zu 6 °C und die Teilchengröße zu 155 nm bestimmt.

### Beispiel 5 (Vergleichsbeispiel, ohne Acrylnitril)

In einem 6 L Druckreaktor, ausgerüstet mit einem MIG-Rührer und 3 Dosiereinrichtungen, wurden bei Raumtemperatur und unter Stickstoffatmosphäre 643 g entionisiertes Wasser, 537 g der abgebauten Stärke A und jeweils 5 Gew.-% der Zuläufe 1A und 1 B vorgelegt. Anschließend wurde der Reaktorinhalt unter Rühren (180 Upm) auf 90 °C aufgeheizt, und bei Erreichen von 85 °C wurden 129 g einer 7 gew.-%igen wässrigen Natriumpersulfat-Lösung zugegeben. Nach 10 Minuten wurden zeitgleich beginnend die restliche Menge (jeweils 95%) an Zulauf 1A und Zulauf 1 B innerhalb von 360 Minuten und Zulauf 2 innerhalb von 390 Minuten kontinuierlich mit gleichbleibenden Mengenströmen zudosiert. Über die gesamte Dosierzeit wurden die Mengenströme von Zulauf 1 A und Zulauf 1 B kurz vor dem Eintritt in den Reaktor homogenisiert. Daran anschließend ließ man den Reaktorinhalt noch 2 Stunden bei 90 °C nachreagieren. Danach kühlte man den Reaktorinhalt auf Raumtemperatur ab, stellte mit einer 15 gew.-%igen wässrige NaOH auf einen pH-Wert von 6,5 ein und entspannte den Druckbehälter auf Atmosphärendruck.

### Zulauf 1A

homogene Mischung aus

| | |
|---|---|
| 642 g | entionisiertes Wasser |
| 12 g | einer 15 gew.-%igen wässrigen Natriumdodecylsulfat-Lösung |
| 72 g | Acrylsäure |
| 9 g | Itaconsäure |

### Zulauf 1B

homogene Mischung aus

| | |
|---|---|
| 1026 g | Styrol |
| 22 g | tertiär-Dodecylmercaptan |
| 693 g | Butadien |

### Zulauf 2

| | |
|---|---|
| 360 g | einer 3,5 gew.-%igen wässrigen Natriumpersulfat-Lösung |

Die erhaltene wässrige Dispersion (D5) wies einen Feststoffgehalt von 51 Gew.-%, bezogen auf das Gesamtgewicht der wässrigen Dispersion, auf und enthielt 8 ppm Koagulat. Die Glasübergangstemperatur wurde zu 10 °C und die Teilchengröße zu 137 nm bestimmt.
Die gemäß den Beispielen hergestellten wässrigen Polymerdispersionen werden als Bindemittel für Papierstreichmassen verwendet.

### Herstellung der Papierstreichmassen:

Die Zubereitung der Streichfarbe erfolgt in einem Rühraggregat, in das die einzelnen Komponenten nacheinander zugeführt werden. Die Pigmente werden in vordispergierter Form (slurry) zugegeben. Die anderen Komponenten werden nach den Pigmenten zugegeben, wobei die Reihenfolge der Reihenfolge im angegebenen Streichfarbenrezept entspricht. Die Einstellung des Endfeststoffgehalts erfolgt durch die Zugabe von Wasser.

### Streichfarbenrezept:

70 Teile feinteiliges Carbonat (Hydrocarb 90, Omya)
30 Teile feinteiliges Clay (Hydragloss 90, Omya)
10 Teile Streichfarbenbinder (Emulsionspolymerisate der Beispiele 1-5)
0,5 Teile Rheologiehilfsmittel (Carboxymethylcellulose)
Streichfarbendaten:
   Feststoffgehalt 66%
   Viskosität (Brookfield RVT, Spindel 4, 100 Upm): 1000-1400 mPas

Die Streichfarbe wird mittels einer Laborstreichmaschine einseitig auf ein Streichrohpapier aufgetragen und mittels eines IR-Strahlers getrocknet. Das Gewicht der aufgetragenen Strichschicht beträgt ca. 10 g/m2.

Das beschichtete Papier wurde mit dem Fachmann bekannten Prüfverfahren auf die Oberflächenfestigkeit untersucht. Es wurden die folgenden Prüfverfahren angewendet: IGT Trockenrupffestigkeit
IGT Nassrupffestigkeit
Prüfbau Offsettest.

Die Ergebnisse sind in der folgenden Tabelle zusammengefasst.

### Offsettest

Die Prüfung wird auf einem "Prüfbau"-Probedruckgerät durchgeführt. Aus den zu prüfenden Papieren werden Proben mit einer Größe von 240 x 46 mm in der Längsrichtung ausgeschnitten und auf einem Druckprobenträger fixiert. Das Papier wird in dem Gerät mit einer Druckwalze mit einer Geschwindigkeit von 1 m/s bedruckt. Dabei ist die Farbmenge so gewählt, dass eine vollflächige Farbfläche entsteht. Der bedruckte Papierstreifen wird nach dem ersten Druckdurchgang wieder in die Ausgangslage gebracht und nach einer vorgegebenen Zeit (10s, 30s) wieder mit derselben Druckwalze in Kontakt gebracht. Dieser Vorgang wird mehrmals wiederholt, maximal werden 6 Durchgänge gemacht. Nach jedem Druckgang wird die bedruckte Fläche auf Ausrisse (Rupfen) visuell überprüft. In der Tabelle ist die Anzahl der Durchgänge angegeben bis zum ersten Mal ein Rupfen auftritt sowie die Intervallzeit der Durchgänge. Je höher die Anzahl der Durchgänge bis zum Auftreten des Rupfens, desto besser ist die Eignung der Papiere für den Offsetdruck.

### Trockenrupffestigkeit mit dem IGT-Probedruckgerät (IGT trocken)

Aus den zu prüfenden Papieren wurden Streifen geschnitten und mit dem IGT-Probedruckgerät bedruckt. Als Druckfarben werden spezielle Prüffarben der Fa. Lorillieux verwendet, die unterschiedliche Zugkräfte übertragen. Die Prüfstreifen werden mit kontinuierlich steigender Geschwindigkeit (maximale Geschwindigkeit 200 cm/s) durch das Druckwerk geführt. Bei der Auswertung wird auf dem Probedruckstreifen der Ort bestimmt, an dem nach Druckbeginn 10 Ausrisse aus der Papieroberfläche (Rupfpunkte) erfolgt sind. Als Maß für die Trockenrupffestigkeit wird die Geschwindigkeit in cm/sec angegeben, die an diesem Ort beim Bedrucken vorlag, sowie die verwendete Prüffarbe. Dabei wird die Qualität einer Papieroberfläche umso besser bewertet, je höher diese Druckgeschwindigkeit am zehnten Rupfpunkt ist.

### Nassrupffestigkeit mit dem IGT-Probedruckgerät (IGT nass)

Aus den zu prüfenden Papieren wurden Streifen geschnitten und mit dem IGT-Probedruckgerät bedruckt. Das Druckgerät wurde so eingerichtet, dass die Prüfstreifen vor dem Druckvorgang mit Wasser befeuchtet werden. Als Druckfarben werden spezielle Prüffarben der Fa. Lorillieux verwendet, die unterschiedliche Zugkräfte übertragen. Der Druck wird mit einer konstanten Geschwindigkeit von 0,6 cm/s durchgeführt. Ausrisse aus der Papieroberfläche sind als unbedruckte Stellen sichtbar. Zur Bestimmung der Nassrupffestigkeit wird mit einem Farbdensitometer die Farbdichte im Vergleich zum vollen Farbton in % bestimmt. Je höher die angegebene Farbdichte, desto besser die Nassrupffestigkeit.

| | Trockenrupffestigkeit in cm/s | Nassrupffestigkeit in % | Offsettest |
|---|---|---|---|
| Beispiel 1 (Vergleich) | x1) | x1) | x1) |
| Beispiel 2 (Vergleich) | 130 | 83 | 3 |
| Beispiel 3 | 144 | 92 | 4 |
| Beispiel 4 | 139 | 95 | 5 |
| Beispiel 5 (Vergleich) | 122 | 69 | 4 |
| x1) stark koaguliert, keine Prüfung möglich | | | |

## Patentansprüche

1. Verfahren zur Herstellung von wässrigen Polymerdispersionen, wobei
(a) mindestens eine vinylaromatische Verbindung,
(b) mindestens ein konjugiertes aliphatisches Dien und
(c) mindestens ein ethylenisch ungesättigtes Carbonsäurenitril in wässrigem Medium copolymerisiert werden,
wobei die Copolymerisation der Monomeren in Gegenwart einer abgebauten Stärke und von Radikale bildenden Initiatoren erfolgt,
wobei mindestens ein Teil der von ethylenisch ungesättigten Carbonsäurenitrilen verschiedenen Monomere polymerisiert werden, bevor die ethylenisch ungesättigten Carbonsäurenitrile dem Polymerisationsgemisch zugegeben werden, und wobei 15 bis 60 Gew.-Teile einer abgebauten Stärke auf 100 Gew.-Teile der Monomeren eingesetzt werden.

2. Verfahren nach dem vorhergehenden Anspruch, **dadurch gekennzeichnet, dass**
(a) 19,8 bis 80 Gew.-Teile mindestens einer vinylaromatischen Verbindung,
(b) 19,8 bis 80 Gew.-Teile mindestens eines konjugierten aliphatischen Diens,
(c) 0,1 bis 19 Gew.-Teile mindestens eines ethylenisch ungesättigten Carbonsäurenitrils,
(d) 0,1 bis 10 Gew.-Teile mindestens einer ethylenisch ungesättigten Säure und
(e) 0 bis 20 Gew.-Teile mindestens eines anderen monoethylenisch ungesättigten Monomeren,
eingesetzt werden, wobei die Summe der Gew.-Teile der Monomeren (a) bis (e) 100 beträgt.

3. Verfahren nach einem der vorhergehenden Ansprüche, **dadurch gekennzeichnet, dass** mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden.

4. Verfahren nach einem der vorhergehenden Ansprüche, **dadurch gekennzeichnet, dass** mindestens 10 Gew.-%, bezogen auf die Gesamtmenge aller Monomere, an von ethylenisch ungesättigten Carbonsäurenitrilen verschiedenen Monomeren in dem wässrigen Medium vorgelegt oder der Polymerisationsmischung zugegeben werden, bevor die Zugabe von ethylenisch ungesättigten Carbonsäurenitrilen gestartet wird.

5. Verfahren nach einem der vorhergehenden Ansprüche, **dadurch gekennzeichnet, dass** 1 bis 10 Gew.-%, bezogen auf die Gesamtmenge aller Monomere, an von ethylenisch ungesättigten Carbonsäurenitrilen verschiedenen Monomeren in dem wässrigen Medium vorgelegt werden.

6. Verfahren nach einem der vorhergehenden Ansprüche, **dadurch gekennzeichnet, dass** eine abgebaute native Stärke mit einer intrinsischen Viskosität ηi von weniger als 0,07 dl/g eingesetzt wird.

7. Verfahren nach einem der vorhergehenden Ansprüche, **dadurch gekennzeichnet, dass** die vinylaromatische Verbindung ausgewählt ist aus Styrol, Methylstyrol und deren Gemisch, das konjugierte aliphatische Dien ausgewählt ist aus 1,3-Butadien, Isopren und deren Gemisch, das ethylenisch ungesättigte Carbonsäurenitril ausgewählt ist aus Acrylnitril und Methacrylnitril und deren Gemisch, und die ethylenisch ungesättigte Säure ausgewählt ist aus einer oder mehrerer Verbindungen der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat, Vinylphosphonsäure und Salzen dieser Säuren.

8. Verfahren nach einem der vorhergehenden Ansprüche, **dadurch gekennzeichnet, dass**
(a) 25 bis 70 Gew.-Teile Styrol und/oder Methylstyrol,
(b) 25 bis 70 Gew.-Teile Butadien-1,3 und/oder Isopren,
(c) 1 bis 19 Gew.-Teile Acrylnitril und/oder Methacrylnitril,
(d) 0,1 bis 10 Gew.-Teile mindestens einer ethylenisch ungesättigten Säure, ausgewählt aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat und Sulfopropylmethacrylat, und
(e) 0 bis 20 Gew.-Teile mindestens eines anderen monoethylenisch ungesättigten Monomeren,
eingesetzt werden, wobei die Summe der Gew.-Teile der Monomeren (a) bis (e) 100 beträgt.

9. Wässrige Polymerdispersion hergestellt durch radikalisch initiierte Emulsionspolymerisation gemäß einem der vorhergehenden Verfahrensansprüche.

10. Polymerdispersion nach dem vorhergehenden Anspruch, **dadurch gekennzeichnet, dass** der Feststoffgehalt größer 55 Gew.% beträgt.

11. Verwendung der wässrigen Polymerdispersion nach einem der beiden vorhergehenden Ansprüche als Bindemittel, Klebstoff, Schlichtemittel für Fasern, zur Herstellung von Überzügen oder zur Herstellung von Papierstreichmassen.

12. Papierstreichmasse enthaltend
(i) anorganische Pigmente und
(ii) eine wässrige Polymerdispersion nach einem der Ansprüche 9 bis 10.

13. Papierstreichmasse nach dem vorhergehenden Anspruch, **dadurch gekennzeichnet, dass** die Polymerisate der wässrigen Polymerdispersion in einer Menge von 1 bis 50 Gew.-Teilen, bezogen auf die Gesamtmenge an Pigmenten, eingesetzt werden und dass die Pigmente in einer Menge von 80 bis 95 Gewichtsteilen, bezogen auf den Gesamtfeststoffgehalt, enthalten sind und ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und dass die Papierstreichmasse zusätzlich mindestens einen Hilfsstoff enthält, ausgewählt aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

14. Mit einer Papierstreichmasse gemäß einem der beiden vorhergehenden Ansprüche beschichtetes Papier oder Karton.

15. Verfahren zum Streichen von Papier oder Karton, wobei
- eine wässrige Polymerdispersion nach einem der Ansprüche 9 bis 10 zur Verfügung gestellt wird; und
- mit der wässrigen Polymerdispersion, mindestens einem Pigment und optionalen weiteren Hilfsstoffen eine Papierstreichmasse hergestellt wird; und
- und die Papierstreichmasse auf mindestens eine Oberfläche von Papier oder Karton aufgebracht wird.

## Claims

1. A process for the preparation of aqueous polymer dispersions,
(a) at least one vinylaromatic compound,
(b) at least one conjugated aliphatic diene and
(c) at least one ethylenically unsaturated carbonitrile
being copolymerized in an aqueous medium,
the copolymerization of the monomers being effected in the presence of a degraded starch and of free radical initiators,
at least a part of the monomers differing from ethylenically unsaturated carbonitriles being polymerized before the ethylenically unsaturated carbonitriles are added to the polymerization mixture, and
from 15 to 60 parts by weight of a degraded starch being used per 100 parts by weight of the monomers.

2. The process according to the preceding claim, wherein
(a) from 19.8 to 80 parts by weight of at least one vinylaromatic compound,
(b) from 19.8 to 80 parts by weight of at least one conjugated aliphatic diene,
(c) from 0.1 to 19 parts by weight of at least one ethylenically unsaturated carbonitrile,
(d) from 0.1 to 10 parts by weight of at least one ethylenically unsaturated acid and
(e) from 0 to 20 parts by weight of at least one other monoethylenically unsaturated monomer,
are used, the sum of the parts by weight of the monomers (a) to (e) being 100.

3. The process according to either of the preceding claims, wherein at least 30% by weight of the initiators are initially taken together with the degraded starch in the aqueous medium and the monomers and the remaining initiators are metered into this initially taken mixture under polymerization conditions.

4. The process according to any of the preceding claims, wherein at least 10% by weight, based on the total amount of all monomers, of monomers differing from ethylenically unsaturated carbonitriles are initially taken in the aqueous medium or are added to the polymerization mixture before the addition of ethylenically unsaturated carbonitriles is started.

5. The process according to any of the preceding claims, wherein from 1 to 10% by weight, based on the total amount of all monomers, of monomers differing from ethylenically unsaturated carbonitriles are initially taken in the aqueous medium.

6. The process according to any of the preceding claims, wherein a degraded native starch having an intrinsic viscosity ηi of less than 0.07 dl/g is used.

7. The process according to any of the preceding claims, wherein the vinylaromatic compound is selected from styrene, methylstyrene and mixtures thereof, the conjugated aliphatic diene is selected from 1,3-butadiene, isoprene and mixtures thereof, the ethylenically unsaturated carbonitrile is selected from acrylonitrile and methacrylonitrile and mixtures thereof, and the ethylenically unsaturated acid is selected from one or more compounds of the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate, vinylphosphonic acid and salts of these acids.

8. The process according to any of the preceding claims, wherein
(a) from 25 to 70 parts by weight of styrene and/or methylstyrene,
(b) from 25 to 70 parts by weight of 1,3-butadiene and/or isoprene,
(c) from 1 to 19 parts by weight of acrylonitrile and/or methacrylonitrile,
(d) from 0.1 to 10 parts by weight of at least one ethylenically unsaturated acid selected from acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate and sulfopropyl methacrylate, and
(e) from 0 to 20 parts by weight of at least one other monoethylenically unsaturated monomer,
are used, the sum of the parts by weight of the monomers (a) to (e) being 100.

9. An aqueous polymer dispersion, prepared by free radical emulsion polymerization according to any of the preceding process claims.

10. The polymer dispersion according to the preceding claim, wherein the solids content is greater than 55% by weight.

11. The use of the aqueous polymer dispersion according to one of the two preceding claims as the binder, adhesive, size for fibers, for the production of coverings or for the preparation of paper coating slips.

12. A paper coating slip comprising
(i) inorganic pigments and
(ii) an aqueous polymer dispersion according to either of claims 9 and 10.

13. The paper coating slip according to the preceding claim, wherein the polymers of the aqueous polymer dispersion are used in an amount from 1 to 50 parts by weight, based on the total amount of pigments, and wherein the pigments are present in an amount of from 80 to 95 parts by weight, based on the total solids content, and are selected from the group consisting of calcium sulfate, calcium aluminate sulfate, barium sulfate, magnesium carbonate, calcium carbonate, silicic acids, aluminum oxides, aluminum hydroxide, silicates, titanium dioxide, zinc oxide, kaolin, alumina, talc and silicon dioxide, and wherein the paper coating slip additionally comprises at least one assistant selected from the group consisting of thickeners, further polymeric binders, cobinders, optical brighteners, fillers, leveling agents, dispersants, surfactants, lubricants, neutralizing agents, antifoams, deaerating agents, preservatives and dyes.

14. A paper or cardboard coated with a paper coating slip according to one of the two preceding claims.

15. A process for coating paper or cardboard,
- an aqueous polymer dispersion according to either of claims 9 and 10 being provided; and
- a paper coating slip being prepared with the aqueous polymer dispersion, at least one pigment and optional further assistants; and
- the paper coating slip being applied to at least one surface of paper or cardboard.

## Revendications

1. Procédé pour la préparation de dispersions aqueuses de polymère, en copolymérisant
(a) au moins un composé aromatique de vinyle,
(b) au moins un diène aliphatique conjugué et
(c) au moins un nitrile d'acide carboxylique éthyléniquement insaturé,
en milieu aqueux,
la copolymérisation des monomères ayant lieu en présence d'un amidon dégradé et d'initiateurs formant des radicaux,
au moins une partie des monomères différents des nitriles d'acide carboxylique éthyléniquement insaturé étant polymérisée avant que les nitriles d'acide carboxylique éthyléniquement insaturé ne soient ajoutés au mélange de polymérisation, et
15 à 60 parties en poids d'un amidon dégradé étant utilisées pour 100 parties en poids de monomères.

2. Procédé selon la revendication précédente, **caractérisé en ce qu'**on utilise
(a) 19,8 à 80 parties en poids d'au moins un composé aromatique de vinyle
(b) 19,8 à 80 parties en poids d'au moins un diène aliphatique conjugué,
(c) 0,1 à 19 parties en poids d'au moins un nitrile d'acide carboxylique éthyléniquement insaturé,
(d) 0,1 à 10 parties en poids d'au moins un acide éthyléniquement insaturé et
(e) 0 à 20 parties en poids d'au moins un autre monomère éthyléniquement monoinsaturé,
la somme des parties en poids des monomères (a) à (e) valant 100.

3. Procédé selon l'une quelconque des revendications précédentes, **caractérisé en ce qu'**on dispose au préalable au moins 30% en poids des initiateurs ensemble avec l'amidon dégradé dans le milieu aqueux et les monomères ainsi que les initiateurs résiduels sont dosés dans des conditions de polymérisation dans cette charge préalable.

4. Procédé selon l'une quelconque des revendications précédentes, **caractérisé en ce qu'**on dispose au préalable dans le milieu aqueux ou ajoute au mélange de polymérisation au moins 10% en poids, par rapport à la quantité totale de tous les monomères, de monomères différents des nitriles d'acide carboxylique éthyléniquement insaturé, avant que l'addition des nitriles d'acide carboxylique éthyléniquement insaturé ne soit démarrée.

5. Procédé selon l'une quelconque des revendications précédentes, **caractérisé en ce qu'**on dispose au préalable 1 à 10% en poids, par rapport à la quantité totale de tous les monomères, de monomères différents des nitriles d'acide carboxylique éthyléniquement insaturé dans le milieu aqueux.

6. Procédé selon l'une quelconque des revendications précédentes, **caractérisé en ce qu'**on utilise un amidon naturel dégradé présentant une viscosité intrinsèque ηi inférieure à 0,07 dl/g.

7. Procédé selon l'une quelconque des revendications précédentes, **caractérisé en ce que** le composé aromatique de vinyle est choisi parmi le styrène, le méthylstyrène et leur mélange, le diène aliphatique conjugué est choisi parmi le 1,3-butadiène, l'isoprène et leur mélange, le nitrile d'acide carboxylique éthyléniquement insaturé est choisi parmi l'acrylonitrile et le méthacrylonitrile et leur mélange et l'acide éthyléniquement insaturé est choisi parmi un ou plusieurs composés du groupe constitué par l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle, le méthacrylate de sulfopropyle, l'acide vinylphosphonique et les sels de ces acides.

8. Procédé selon l'une quelconque des revendications précédentes, **caractérisé en ce qu'**on utilise
(a) 25 à 70 parties en poids de styrène et/ou de méthylstyrène,
(b) 25 à 70 parties en poids de butadiène-1,3 et/ou d'isoprène,
(c) 1 à 19 parties en poids d'acrylonitrile et/ou de méthacrylonitrile,
(d) 0,1 à 10 parties en poids d'au moins un acide éthyléniquement insaturé, choisi parmi l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidométhylpropanesulfonique, l'acrylate de sulfopropyle et le méthacrylate de sulfopropyle, et
(e) 0 à 20 parties en poids d'au moins un autre monomère éthyléniquement monoinsaturé,
la somme des parties en poids des monomères (a) à (e) valant 100.

9. Dispersion aqueuse de polymère, préparée par polymérisation en émulsion initiée par voie radicalaire selon l'une quelconque des revendications précédentes.

10. Dispersion de polymère selon la revendication précédente, **caractérisée en ce que** la teneur en solides est supérieure à 55% en poids.

11. Utilisation de la dispersion aqueuse de polymère selon l'une quelconque des deux revendications précédentes comme liant, adhésif, agent d'encollage pour fibres, pour la fabrication de revêtements ou pour la préparation de masses de couchage pour papier.

12. Masse de couchage pour papier contenant
(i) des pigments inorganiques et
(ii) une dispersion aqueuse de polymère selon l'une quelconque des revendications 9 à 10.

13. Masse de couchage pour papier selon la revendication précédente, **caractérisée en ce que** les polymères de la dispersion aqueuse de polymère sont utilisés en une quantité de 1 à 50 parties en poids, par rapport à la quantité totale de pigments et **en ce que** les pigments sont contenus en une quantité de 80 à 95 parties en poids, par rapport à la teneur totale en solides et sont choisis dans le groupe constitué par le sulfate de calcium, l'aluminate-sulfate de calcium, le sulfate de baryum, le carbonate de magnésium, le carbonate de calcium, les silices, les oxydes d'aluminium, l'aluminium hydraté, les silicates, le dioxyde de titane, l'oxyde de zinc, le kaolin, l'argile, le talc et le dioxyde de silicium et **en ce que** la masse de couchage pour papier contient en outre au moins un adjuvant, choisi dans le groupe constitué par les épaississants, d'autres liants polymères, les co-liants, les azurants optiques, les charges, les adjuvants d'étalement, les dispersants, les agents tensioactifs, les lubrifiants, les agents de neutralisation, les antimousses, les agents de désaération, les conservateurs et les colorants.

14. Papier ou carton revêtu d'une masse de couchage pour papier selon l'une quelconque des deux revendications précédentes.

15. Procédé pour le couchage de papier ou de carton,
- une dispersion aqueuse de polymère selon l'une quelconque des revendications 9 à 10 étant mise à disposition ; et
- une masse de couchage pour papier étant préparée à l'aide de la dispersion aqueuse de polymère, au moins un pigment et d'autres adjuvants éventuels ; et
- la masse de couchage pour papier étant appliquée sur au moins une surface en papier ou en carton.
